(19) Europäisches Patentamt
European Patent Office
Office européen des brevets

(11) **EP 3 286 238 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(21) Anmeldenummer: **16716889.7**

(22) Anmeldetag: **18.04.2016**

(51) Int Cl.:
*C08G 18/62* (2006.01)   *C08G 18/73* (2006.01)
*C08G 18/79* (2006.01)   *C08G 18/02* (2006.01)
*C09D 175/04* (2006.01)

(86) Internationale Anmeldenummer:
**PCT/EP2016/058573**

(87) Internationale Veröffentlichungsnummer:
**WO 2016/169895 (27.10.2016 Gazette 2016/43)**

(54) **POLYISOCYANATMISCHUNG AUF BASIS VON 1,5-DIISOCYANATOPENTAN**

MIXTURE OF POLYISOCYANATES BASED ON 1,5-DIISOCYANATOPENTANE

MÉLANGE DE POLYISOCYANATES À BASE DE 1,5-DIISOCYANATOPENTANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2015 EP 15164457**

(43) Veröffentlichungstag der Anmeldung:
**28.02.2018 Patentblatt 2018/09**

(73) Patentinhaber: **Covestro Deutschland AG**
**51373 Leverkusen (DE)**

(72) Erfinder:
• **HECKING, Andreas**
**40764 Langenfeld (DE)**
• **EGGERT, Christoph**
**50733 Köln (DE)**
• **WEIKARD, Jan**
**51375 Leverkusen (DE)**
• **BEHNKEN, Gesa**
**50676 Köln (DE)**

(74) Vertreter: **Levpat**
**c/o Covestro AG**
**Gebäude 4825**
**51365 Leverkusen (DE)**

(56) Entgegenhaltungen:
**EP-A1- 2 418 198     EP-A1- 2 684 867**
**DE-A1- 4 229 183**

EP 3 286 238 B1

**Beschreibung**

Die Erfindung betrifft eine Polyisocyanatmischung auf Basis von 1,5-Diisocyanatopentan. Weitere Gegenstände der Erfindung sind ein, die Polyisocyanatmischung enthaltendes, Zwei-Komponenten-System, ein Verfahren zur Herstellung einer Beschichtung. Darüber hinaus sind die Beschichtung, eine Verwendung des Zwei-Komponenten-Systems zur Herstellung einer Beschichtung auf einem Substrat und ein Verbund aus der Beschichtung und einem Substrat weitere Gegenstände der Erfindung.

Zwei-Komponenten Polyurethan-Beschichtungen sind seit langem bekannt. Für hochwertige lichtechte Decklacke kommen dabei besonders Beschichtungen aus aliphatischen Polyisocyanaten und Polyolen wie z.B. Polyacrylatpolyolen, Polyesterpolyolen oder Polycarbonatpolyolen zum Einsatz. Als Polyisocyanate kommen für diese hochwertigen Beschichtungen besonders monomerenarme Derivate hergestellt aus 1,6-Hexamethylendiisocyanat (HDI) zum Einsatz. Besonders geeignet für elastische, hochbeständige Beschichtungen sind Isocyanurat-Polyisocyanate des HDI oder Iminooxadiazindion- und Isocyanurat-Strukturen aufweisende Polyisocyanate des HDI, wie sie z.B. in H. J. Laas, R. Halpaap, J. Pedain, J. prakt. Chem. 1994, 336, 185-200 oder in EP 0330966 B1 oder EP 0798299 B1 beschrieben sind. Diese Polyisocyanate haben in der Regel Isocyanatfunktionalitäten ($F_{NCO}$) von 3 oder mehr, wobei man unter Isocyanatfunktionalität die mittlere Zahl an NCO-Gruppen pro Molekül versteht.

Neben dem HDI ist auch 1,5-Diisocyanatopentan (PDI) als Monomer bereits lange bekannt, wie beispielsweise von W. Siefken, Liebigs Ann. Chem. 1949, 562, Seite 122 oder in der DE 1493360 B1 und der DE 1900514 A1 beschrieben.

Den mengenmäßig größten Teil der Anwendungsbereiche decken lösungsmittelhaltige Ein- und Zwei-Komponenten Polyurethan-Lacke ab. Im breiten Spektrum der industriellen Anwendung werden diese meist durch geeignete Sprühverfahren appliziert. Als Bezugspunkt in der jeweiligen Anwendung dient in aller Regel der Festkörpergehalt bei Spritzviskosität. Ein zu geringer Festkörpergehalt macht sich z.B. in einem schlechteren Deckvermögen bzw. geringerer Füllkraft oder verminderter Ergiebigkeit bemerkbar.

Um den Trend der steigenden Anforderungen an den Umweltschutz zu entsprechen, wurden in der Lackindustrie vermehrt Anstrengungen unternommen besonders niedrigviskose Polyisocyanate zur Verfügung zu stellen. Nachteilig an solchen niedermolekularen Systemen ist, dass in der Herstellung schon bei einem sehr niedrigen Polymerisierungsgrad des Monomers die Polymerreaktion abgebrochen werden muss, um die erforderlichen Viskosität zu erreichen.

Das niedermolekulare Polyisocyanat kann zwar vom überschüssigen Monomer durch geeignete Methoden abgetrennt und das zurückerhaltene Monomer um den polymerisieren Anteil mit neuem Monomer ergänzt und wieder zur Reaktion gebracht werden. Insgesamt wird dadurch jedoch die Raum-Zeitausbeute eines solchen Herstellverfahrens deutlich negativ beeinflusst.

Die DE 19611849 offenbart eine Viskositätserniedrigung des so hergestellten Polyisocyanats durch die gezielte simultane Synthese symmetrischer und asymmetrischer Polyisocyanurat Strukturen, doch lassen sich damit in formulierten Lacksysteme auch nur marginal höheren Festkörperanteile realisieren. Somit haben die Bestrebungen genannter Schriften zur Viskositätserniedrigung nicht den gewünschten Effekt der signifikanten Reduzierung des Lösungsmittelanteils in Lackformulierungen erreicht. Weiterhin blieb die nachteilige Raum-Zeitausbeute ungelöst bestehen.

Somit war es weiterhin erstrebenswert, die vorstehend genannten positiven Eigenschaften einer hohen Raum-Zeitausbeute mit einem möglichst hohen Gehalt an reaktiven Isocyanatgruppen und den von der Lackindustrie geforderten Festköpergehalten bei Spritzviskosität in Lackformulierungen mit einem Polyisocyanat verwirklichen zu können.

Aufgabe der vorliegenden Erfindung war es daher, eine Polyisocyanatmischung bereitzustellen, die sich in der Herstellung durch eine optimierte Raum-Zeitausbeute und einen möglichst hohen Gehalt an reaktiven Isocyanatgruppen auszeichnet und gleichzeitig die von der Lackindustrie geforderten Festköpergehalte bei Spritzviskosität in Lackformulierungen erfüllt.

Diese Aufgabe wurde erfindungsgemäß durch eine Polyisocyanatmischung, enthaltend wenigstens ein Polyisocyanat auf Basis von 1,5-Diisocyanatopentan und wenigstens ein organisches Lösungsmittel, wobei das organische Lösungsmittel gegenüber Isocyanatgruppen inert ist und wobei die Polyisocyanatmischung einen Festkörpergehalt von ≥ 35 und ≤ 65 Gew.-% aufweist, gelöst.

Vorliegend wird unter einer Polyisocyanatmischung eine Mischung verstanden, die beispielsweise eine Lösung, Suspension oder Emulsion sein kann. Das Erscheinungsbild der Mischung kann je nachdem welche Polyisocyanate und organische Lösungsmittel enthalten sind variieren, bevorzugt sind aber Lösungen.

Vorliegend wird unter der Raum-Zeitausbeute die spezifische Produktionsleistung welche dann als Masse in Bezug zu einer anderen messbaren Größe (z.B. Kubikmeter, Stunde) gesetzt wird, verstanden. Im Falle von Isocyanatoligomerisierungen hat sich als Maß für die spezifische Produktionsleistung der Quotient aus dem zur Reaktion gebrachten monomeren Diisocyanat und der daraus hergestellten Menge an Polyisocyanat etabliert.

Ferner kann beispielsweise bei der Isocyanatoligomerisierung der rechnerisch ermittelbare Polymerisierungsgrad als Maß für die spezifische Produktionsleistung mit herangezogen werden.

Vorliegend wird unter dem Polymerisierungsgrad der Prozentsatz, der in der Ausgangsmischung ursprünglich vorhandenen Isocyanatgruppen zu verstehen, der während der erfindungsgemäßen Umsetzung verbraucht wird. Der Polymerisierungsgrad in Prozent kann nach folgender Formel berechnet werden:

$$\text{Polymerisierungsgrad} = (\text{NCO Start} - \text{NCO Ende}) / \text{NCO Start} \times 100$$

Der Gehalt an Isocyanatgruppen kann z.B. titrimetrisch gemäß DIN EN ISO 11 909 bestimmt werden.

Vorliegend wird unter Spritzviskosität die für die in sprühender oder spritzender Verarbeitung eingestellte, benötigte Viskosität des Lacksystems verstanden. Gemessen bzw. eingestellt wird die Spritzviskosität vor der eigentlichen Verwendung in der Spritzpistole oder dem Lackierautomaten durch Bestimmung der Auslaufzeit eines mit dem Lacksystem gefüllten speziellen Auslaufbechers.

In einer ersten bevorzugten Ausführungsform weist das Polyisocyanat einen Polymerisierungsgrad von ≥ 20%, bevorzugt von > 25% und besonders bevorzugt von ≥ 30% auf. Hieraus ergibt sich unter anderem der Vorteil, dass die Raum-Zeitausbeute noch weiter verbessert werden kann. Die vorgenannten Polymerisierungsgrade werden im Allgemeinen nach einer Reaktionszeit von 30 Minuten bis 30 Stunden, bevorzugt von 1 bis 8 Stunden, besonders bevorzugt von 2 bis 6 Stunden erreicht. Die Umsetzung kann beispielsweise nach Erreichen des angestrebten Polymerisierungsgrades abgebrochen werden.

Als Polyisocyanat auf Basis von 1,5-Diisocyanatopentan sind beliebige durch Modifizierung von 1,5-Diisocyanatopentan erhältliche oligomere Polyisocyanate mit Uretdion-, Isocyanurat-, Allophanat-, Biuret-, Iminooxadiazindion- und/oder Oxadiazintrionstruktur oder beliebige Gemische solcher PDI-Polyisocyanate geeignet. Die Herstellung dieser Polyisocyanate erfolgt nach an sich bekannten Methoden zur Isocyanatoligomerisierung, wie sie beispielsweise in J. Prakt. Chem. 336 (1994) 185 - 200 und EP-A 0 798 299 beschrieben sind, durch Umsetzung eines Teils der Isocyanatgruppen des PDI unter Bildung von Polyisocyanatmolekülen, die aus mindestens zwei Diisocyanatmolekülen bestehen, und einer sich in der Regel anschließenden destillativen oder extraktiven Abtrennung des nicht umgesetzten monomeren PDI. In einer Ausführungsform der Erfindung bestehen sie also aus den Ausgangskomponenten, den Reaktionsprodukten und eventuell noch kleinen Restmonomermengen an 1,5-Diisocyanatopentan. Konkrete Beispiele für derartige oligomere PDI-Polyisocyanate finden sich beispielsweise in EP-A 2 418 198, EP-A 2 684 867, JP 2010-121011, JP 2010-254764, JP 2010-265364, JP 2011-201863, JP 2012-152202, JP 2013-060542.

Es ist weiterhin besonders bevorzugt, wenn der Restmonomerengehalt an 1,5-Diisocyanatopentan in dem Polyisocyanat unter 0,5 Gew.-%, bevorzugt unter 0,3 Gew.-% liegt. Die Bestimmung der Restmonomerengehalte kann beispielsweise gaschromatographisch nach der DIN EN ISO 10283 erfolgen.

Das zur Herstellung des Polyisocyanates zum Einsatz kommende 1,5-Diisocyanatopentan ist auf verschiedene Weise, beispielsweise durch Phosgenierung in der Flüssig- oder Gasphase oder auf phosgenfreien Weg, wie z.B. durch thermische Urethanspaltung, ausgehend von vorzugsweise biotechnologisch durch Decarboxylierung der natürlich vorkommenden Aminosäure Lysin erhaltenem 1,5-Diaminopentan zugänglich.

Hierbei ist es besonders bevorzugt, wenn das 1,5-Diisocyanatopentan durch Phosgenierung von 1,5-Diaminopentan in der Gasphase erhalten wird. Die Phosgenierung von Aminen in der Gasphase an sich ist bekannt und kann beispielsweise, wie in EP 0 289 840 B1, EP 1 319 655 A2, EP 1 555 258 A1, EP 1 275 639 A1, EP 1 275 640 A1, EP 1 449 826 A1, EP 1 754 698 B1, DE 10 359 627 A1 oder in der deutschen Patentanmeldung DE 10 2005 042392 A1 beschrieben, erfolgen.

Gegebenenfalls können bei der Herstellung des Polyisocyanates neben 1,5-Diisocyanatopentan weitere Diisocyanate mit aliphatisch, cycloaliphatisch, araliphatisch und/oder aromatisch gebundenen Isocyanatgruppen mitverwendet werden. Hierbei handelt es sich insbesondere um solche des Molekulargewichtsbereichs 140 bis 400, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3-und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyana-todicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (XDI), 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Diese bei der Herstellung des Polyisocyanates gegebenenfalls mitzuverwendenden Diisocyanate sind beispielsweise ebenfalls durch Phosgenierung in der Flüssig- oder Gasphase erhältlich und kommen, falls überhaupt, in Mengen von bis zu 80 Gew.-%, vorzugsweise bis zu 50 Gew.-%, besonders bevorzugt bis zu 20 Gew.-%, bezogen auf die Gesamtmenge an eingesetzten Diisocyanaten zum Einsatz. Bei der optionalen Mitverwendung oben genannter Diisocyanate ist es weiterhin bevorzugt, wenn der Restmonomerengehalt der eingesetzten Diisocyanate in dem Polyisocyanat unter 0,5 Gew.-%, bevorzugt unter 0,3 Gew.-% liegt.

Im Allgemeinen weisen die Polyisocyanate eine mittlere Isocyanatfunktionalität von 1,8 bis 9,2, bevorzugt von 1,8 bis 8,0, besonders bevorzugt von 2,0 bis 7,0 und ganz besonders bevorzugt von 2,3 bis 6,0 und/oder einen Gehalt an Isocyanatgruppen von 5,0 bis 26,0 Gew.-%, bevorzugt 6,0 bis 24,0 Gew.-% und besonders bevorzugt von 10,0 bis 23,0 Gew.-% auf.

Ganz besonders bevorzugte Polyisocyanate sind Polyisocyanate, die unter Verwendung von 1,5-Diisocyanatopentan als alleinigem Diisocyanat hergestellt wurden und eine mittlere NCO-Funktionalität von 2 bis 9, bevorzugt von 2,3 bis 7,5 und besonders bevorzugt von 2,5 bis 6 aufweisen. Ferner haben sie einen Gehalt an Isocyanatgruppen von 15,0 bis 27,25 Gew.-%, bevorzugt von 17,0 bis 24,0 Gew.-% und besonders bevorzugt von 19,0 bis 23,0 Gew.-%, bezogen auf das Gesamtgewicht an Polyisocyanat in der Polyisocyanatmischung. Außerdem weisen sie einen Gehalt an monomerem 1,5-Diisocyanatopentan von weniger als 1,0 Gew.-%, vorzugsweise von weniger als 0,5 Gew.-% und besonders bevorzugt von weniger als 0,3 Gew.-% auf.

Ebenfalls ganz besonders bevorzugt ist weiterhin, dass die vorstehend ganz besonders bevorzugten Polyisocyanate Isocyanuratstrukturen enthalten. Weiterhin ganz besonders bevorzugt ist, dass die Polyisocyanatmischung ausschließlich aus den vorstehend genannten, ganz besonders bevorzugten Polyisocyanaten und wenigstens einem organischen Lösungsmittel besteht. Hieraus ergibt sich unter anderem der Vorteil, dass sich die rheologischen Eigenschaften der erfindungsgemäßen Polyisocyanatmischung mit der alleinigen Verwendung von PDI als zum Einsatz kommendes Diisocyanat noch weiter verbessern lassen.

Die Herstellung der Polyisocyanate wird vorzugsweise lösemittelfrei durchgeführt. Gegebenenfalls können aber auch geeignete, gegenüber den reaktiven Gruppen der Ausgangskomponenten inerte Lösungsmittel mitverwendet werden. Geeignete Lösemittel sind beispielsweise die untenstehenden, an sich bekannten üblichen Lacklösemittel. Zur gezielten Modifizierung von 1,5-Diisocyanatopentan können jedoch auch Lösungsmittel mit gegenüber Isocyanatgruppen reaktiven Gruppen wie beispielsweise Alkohole zum Einsatz kommen, die mit den Isocyanatgruppen des PDI unter Bildung von Urethan- bzw. Allophanatgruppen reagieren.

Bei Erreichen des gewünschten Polymerisierungsgrads kann die Umsetzung der Isocyanatgruppen beispielsweise durch Abkühlen des Reaktionsgemisches auf Raumtemperatur abgebrochen werden. Im Allgemeinen wird die Umsetzung aber durch Zugabe eines Katalysatorgiftes und gegebenenfalls nachfolgendes kurzzeitiges Erhitzen der Reaktionsmischung beispielsweise auf eine oberhalb 80 °C liegende Temperatur beendet.

Geeignete Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluolsulfonsäure, Trifluormethansulfonsäure, Perfluorbutansulfonsäure, Dodecylbenzolsulfon-säure, p-Toluolsulfon-säuremethylester und -ethylester, Mono- und Dialkylphosphate wie Monotridecylphosphat, Dibutylphosphat und Dioctylphosphat aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester.

Die zur Beendigung der Umsetzung benötigte Menge des Katalysatorgiftes richtet sich dabei nach der Menge des verwendeten Katalysators; im Allgemeinen wird eine äquivalente Menge des Katalysatorgiftes, bezogen auf den zu Beginn eingesetzten Katalysator, eingesetzt. Berücksichtigt man allerdings eventuell während der Umsetzung auftretende Verluste an Katalysator, so können zur Beendigung der Umsetzung auch schon 20 bis 80 Äquivalent-% des Katalysatorgiftes, bezogen auf die Menge des ursprünglich eingesetzten Katalysators, ausreichen.

Die genannten Katalysatorgifte können sowohl in Substanz als auch in einem geeigneten Lösungsmittel gelöst eingesetzt werden. Falls ein Lösungsmittel zur Lösung des Katalysatorgiftes zum Einsatz kommt, wird bevorzugt 1,5-Diisocyanatopentan eingesetzt. Der Verdünnungsgrad kann innerhalb eines sehr breiten Bereichs frei gewählt werden, geeignet sind beispielsweise Lösungen ab einer Konzentration von ≥ 25 Gew.-%, bevorzugt ≥ 10 Gew.-%.

Nach beendeter Umsetzung wird das Polyisocyanat vorzugsweise durch Dünnschichtdestillation im Vakuum, beispielsweise bei einem Druck von unter 1,0 mbar, vorzugsweise unter 0,75 mbar, besonders bevorzugt unter 0,25 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Isocyanatkomponenten und gegebenenfalls mitverwendeten Lösungsmitteln) befreit.

Alternativ zur vorstehend genannten Dünnschichtdestillation können die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan von dem Polyisocyanat abgetrennt werden.

In einer weiteren bevorzugten Ausführungsform wird das organische Lösungsmittel aus der Gruppe aromatischer oder aliphatischer Alkane, Alkene, Ester, Ether, Nitrile und Ketone ausgewählt.

Geeignete organische Lösungsmittel sind allgemein die an sich bekannten üblichen Lacklösungsmittel, die gegenüber Isocyanatgruppen inert sind. Hierzu zählen beispielsweise Ethylacetat, Butylacetat, Ethylenglykolmonomethyl- oder -ethyletheracetat, 1-Methoxypropyl-2-acetat (MPA), 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, Kohlensäureester, wie Dimethylcarbonat, Diethylcarbonat, 1,2-Ethylencarbonat und 1,2 Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher organischen Lösungsmittel. Bevorzugte organische Lösungsmittel sind Ethylacetat, Butylacetat, 1-Methoxypropyl-2-acetat (MPA), Xylol oder Solventnaphtha, oder beliebige Gemische der vorgenannten bevorzugten organischen Lösungsmittel.

Wenn die Zusammensetzung des Materials bekannt ist, beispielsweise von einer Laborrezeptur für Versuche, dann kann der Festkörpergehalt (auch nicht flüchtiger Anteil, nfA, genannt) ohne vorherige Bestimmung komplett berechnet werden. Voraussetzung ist jedoch die Kenntnis über alle Festkörpergehalte der in der Rezeptur eingesetzten Rohstoffe.

Die Festkörpergehalte lassen sich durch das entsprechende Verhältnis des Polyisocyanates mit dem organischen Lösungsmittel bzw. der Polyisocyanate mit den organischen Lösungsmitteln einstellen.

Bei einem Lack ist der Festkörpergehalt als der Anteil eines Beschichtungsmittels, der nach Verdunstung aller flüchtigen Bestandteile zurückbleibt, definiert. Er setzt sich allgemein zusammen aus dem filmbildenden Bindemittel, den Pigmenten und den Füllstoffen. Je höher der Festkörperanteil bei Spritzviskosität ist, umso schneller wird die zum Substratschutz erforderliche Schichtdicke der aufgebrachten Beschichtung erreicht.

Hierbei ist es weiterhin bevorzugt, wenn die erfindungsgemäße Polyisocyanatmischung bei einem Festkörpergehalt von $\geq 35$ und $\leq 65$ Gew.-% eine Viskosität bei 23 °C von $\geq 3$ und $\leq 500$ mPa*s, bevorzugt von $\geq 4$ und $\leq 400$ mPa*s aufweist. Hieraus ergibt sich der Vorteil, dass die erfindungsgemäße Polyisocyanatmischung zur Formulierung von Beschichtungsmitteln besonders gut geeignet ist, da sie bei den eingesetzten Festkörpergehalten die geforderten, niedrigen Viskositäten erreicht.

Die Viskosität wird nach DIN EN ISO 3219 beispielsweise bei 23 °C bestimmt.

Eine Kombination der ersten bevorzugten Ausführungsform mit den vorstehend genannten Festkörpergehalten der erfindungsgemäßen Polyisocyanatmischung ist zudem ganz besonders bevorzugt , da sie den besonderen Vorteil einer sehr hohen Raum-Zeitausbeute der Polyisocyanate mit überraschenderweise gleichermaßen niedrigen Viskositäten der zur Applikation eingesetzten Festkörpergehalte der erfindungsgemäßen Polyisocyanatmischung weiter verstärkt.

In einer weiteren bevorzugten Ausführungsform wird die erfindungsgemäße Polyisocyanatmischung durch Vermischen von wenigstens einem der vorstehend genannten Polyisocyanate mit wenigstens einem der vorstehend genannten organischen Lösungsmittel hergestellt.

Die erfindungsgemäße Polyisocyanatmischung ist für eine Vielzahl von Anwendungen geeignet. So kann die Polyisocyanatmischung über die enthaltenen reaktiven Isocyanatgruppen beispielsweise mit Verbindungen umgesetzt werden, die gegenüber Isocyanatgruppen reaktive Gruppen tragen.

Daher ist ein Zwei-Komponenten-System enthaltend eine Komponente I), umfassend wenigstens eine erfindungsgemäße Polyisocyanatmischung sowie gegebenenfalls weitere Hilfs- und Zusatzstoffe und eine Komponente II), umfassend wenigstens ein gegenüber Isocyanatgruppen reaktives Bindemittel sowie gegebenenfalls weitere Hilfs- und Zusatzstoffe ein weiterer Gegenstand der vorliegenden Erfindung.

In einer weiteren bevorzugten Ausführungsform umfasst das gegenüber Isocyanatgruppen reaktive Bindemittel wenigstens eine amino-, thio- und/oder hydroxyfunktionelle Verbindung, bevorzugt wenigstens eine hydroxyfunktionelle Verbindung. Auch gemischt-funktionelle Verbindungen sind mitumfasst. Solche Verbindungen können beispielsweise Hydroxy- und Thiogruppen gleichermaßen aufweisen.

Geeignete hydroxyfunktionelle Verbindungen sind beispielsweise Polyetherpolyole, Polyesterpolyole, Polycarbonatpolyole oder Polyacrylatpolyole. Als thiofunktionelle Verbindungen sind beispielsweise Pentaerythritoltetra(3-mercaptopropionat), Trimethylolpropantri-(3-mercaptopropionat), Pentaerythritoltetramercaptoacetat und Trimethylolpropantrimercaptoacetat geeignet.

Als aminofunktionelle Verbindungen können beispielsweise Polyamine, wie z.B. die aus der EP-B 0 403 921 bekannten Polyasparaginsäurederivate, oder auch solche Polyamine, deren Aminogruppen in blockierter Form vorliegen, wie z.B. Polyketiminen, Polyaldiminen oder Oxazolanen, eingesetzt werden. Aus diesen blockierten Aminogruppen entstehen unter Feuchtigkeitseinfluss freie Aminogruppen und im Falle der Oxazolane auch freie Hydroxylgruppen, die unter Vernetzung mit den Isocyanatgruppen der erfindungsgemäßen Polyisocyanatmischung abreagieren.

Ein weiterer Gegenstand der vorliegenden Erfindung ist ein Verfahren zur Herstellung einer Beschichtung, bei dem das erfindungsgemäße Zwei-Komponenten-System gemischt und gegebenenfalls unter Erwärmen gehärtet wird.

Falls gemischt-funktionelle Verbindungen eingesetzt werden, können je nach dem welche funktionellen Gruppen diese gemischt-funktionellen Verbindungen enthalten, die erhaltenen Beschichtungen auch Harnstoff-, Thiourethan- bzw. Hydroxygruppen gleichermaßen aufweisen.

Eine Beschichtung, hergestellt oder herstellbar aus dem erfindungsgemäßen Zwei-Komponenten-Systems nach dem erfindungsgemäßen Verfahren ist ein weiterer Gegenstand der vorliegenden Erfindung.

Gegebenenfalls können dem formulierten Zwei-Komponenten-System weitere auf dem Lacksektor übliche Hilfs- und Zusatzmittel zugesetzt werden. Als Hilfs- und Zusatzmittel eignen sich hierbei beispielsweise Verlaufshilfsmittel, Farbpigmente, Füllstoffe, Mattierungsmittel, anorganische oder organische Pigmente, Lichtschutzmittel, Lackadditive, wie Dispergiermittel, Verdicker, Entschäumer und andere Hilfsmittel, wie Haftmittel, Fungizide, Bakterizide, Stabilisatoren oder Inhibitoren und Katalysatoren oder Emulgatoren.

Bei der Herstellung des Zwei-Komponenten-Systems aus der erfindungsgemäßen Polyisocyanatmischung, werden die genannten gegenüber Isocyanatgruppen reaktiven Bindemittel im Allgemeinen in solchen Mengen eingesetzt, die einem Äquivalentverhältnis von Isocyanatgruppen gegenüber Isocyanatgruppen reaktiven Gruppen von 2:1 bis 0,5:1, bevorzugt von 1,5:1 bis 0,8:1, besonders bevorzugt von 1,1:1 bis 0,9:1 entsprechen.

Das Vermischen der erfindungsgemäßen Polyisocyanatmischung mit dem gegenüber Isocyanatgruppen reaktiven Bindemittel kann durch einfaches Verrühren vor der Verarbeitung des Zwei-Komponenten-Systems nach beliebigen Methoden, durch Verwendung von dem Fachmann bekannten mechanischen Hilfsmitteln oder auch unter Verwendung von Zwei-Komponenten-Spritzpistolen erfolgen.

In einer weiteren bevorzugten Ausführungsform können obige Zwei-Komponenten-Systeme bereits bei Raumtemperaturtrocknung hochglänzende, harte und elastische Beschichtungen ergeben, die sich durch hervorragende Lösungsmittelbeständigkeiten auszeichnen. Es ist jedoch ebenso möglich, dass diese Zwei-Komponenten-Systeme unter forcierten Bedingungen bei erhöhter Temperatur bzw. durch Einbrennen bei Temperaturen bis 260 °C getrocknet werden.

Die Zwei-Komponenten-Systeme basierend auf der erfindungsgemäßen Polyisocyanatmischung können nach bekannten Methoden wie beispielsweise durch Spritzen, Streichen, Fluten oder mit Hilfe von Walzen oder Rakeln auf beliebige Substrate aufgetragen werden.

Daher ist die Verwendung des erfindungsgemäßen Zwei-Komponenten-Systems zur Herstellung einer Beschichtung auf einem Substrat ein weiterer Gegenstand der Erfindung.

Als Untergründe für die mit Hilfe der erfindungsgemäßen Polyisocyanatmischung formulierten Zwei-Komponenten-Systeme kommen beliebige Substrate in Betracht, die eine Oberfläche z.B. aus Metall, Holz, harte und flexible Kunststoffe, Glas, Stein aufweisen, aber auch Substrate wie beispielsweise keramische Materialien, Beton, Textilien, Leder und Papier, die vor der Beschichtung gegebenenfalls auch mit üblichen Grundierungen versehen werden können, sind als Substrate geeignet. Bevorzugt weisen die Substrate eine Oberfläche aus Metall, Holz und/oder Kunststoff auf. Die vorteilhaften Viskositätseigenschaften der erfindungsgemäßen Polyisocyanatmischung zeigen sich nicht nur bei der Auftragung durch Spritzen sondern auch bei den anderen Arten der Auftragung.

Ein weiterer Gegenstand der Erfindung ist ein Verbund aus einer erfindungsgemäßen Beschichtung und einem Substrat mit einer Oberfläche aus Metall, Holz und/oder Kunststoff.

Im Nachfolgenden wird die Erfindung an Beispielen näher erläutert.

**Beispiele**

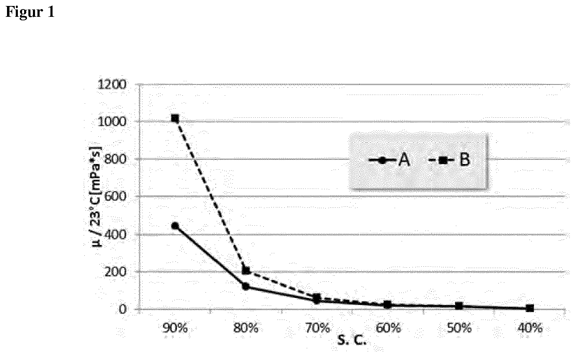

Figur 1: Viskositätsprofil der erfindungsgemäßen Polyisocyanatmischung B und der Polyisocyanatmischung A als Vergleichsbeispiel

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Die Viskositäten wurde zum einem mit einem MCR301-Rheometer der Firma AntonPaar untersucht, dabei wurde das Becher/Rotor-System CC27 mit der Peltierheizung C-PTD200 eingesetzt. Innerhalb der Viskositätsbestimmung wurde folgendes Messprofil untersucht: Rampe Log. von D = 1 - 100 1/s , T = 23°C.

Zum anderen wurden die Auslaufzeiten nach der Norm DIN EN ISO 2431 im DIN 4 Becher bestimmt.

**Eingesetzte Chemikalien**

Dibutylphosphat (Sigma Aldrich)

2-Ethyl-hexan-1-ol (Sigma Aldrich)

N,N,N-Trimethyl-N-benzylammoniumhydroxid (40%ige Lösung in Methanol) (Sigma Aldrich)

Folgende kommerziell verfügbare Produkte wurden für den Vergleich der Viskositäten eingesetzt:

Butylacetat (Azelis Deutschland GmbH, Sankt Augustin)

Folgende kommerziell verfügbaren Polyacrylate für die Beispielformulierungen zur Ermittlung der realisierbaren Festkörpergehalte eingesetzt: Setalux® D A 870 (Lieferform 70% ig in Butylacetat, OH Gehalt 2,93%) und Setalux® D A 665 (Lieferform 60%ig in Butalyacetat/Xylol, OH Gehalt 2,98%) der Nuplex Resins GmbH Bitterfeld, Deutschland.

## Polyisocyanat A (Beispiel A, Vergleichsbeispiel):

In einen Vierhalskolben ausgestattet mit Rührer, Rückflusskühler, $N_2$-Durchleitungsrohr und Innenthermometer wurden 1092 g (6,49 mol) 1,6-Hexamethylendiisocyanat (HDI) vorgelegt und drei mal bei Raumtemperatur entgast und mit Stickstoff belüftet. Anschließend wurde der Ansatz auf 60 °C erwärmt und 6,0 ml der Katalysatorlösung (1,5 %ige N,N,N-Trimethyl-N-benzylammoniumhydroxid Lösung in Methanol und 2-Ethylhexanol) so zudosiert, dass die exotherme Trimerisierung bei einer Temperatur von 60-80 °C gehalten wurde. Bei Erreichen eines NCO-Gehalts von 40,8 Gew.-% wurde die Reaktion mit Dibutylphosphat (equimolare Menge bezogen auf eingesetztes Trimethylbenzylammoniumhydroxid) gestoppt und das überschüssige PDI bei 140 °C und 0,5-0,6 mbar Druck über eine Dünnschichtdestillation abgetrennt.

Die so erhaltene Harzmenge von 338 g wies einen NCO-Gehalt von 21,8%, einen Restmonomerengehalt von 0,3% auf und eine Viskosität von 3.000 mPa*s bei 23 °C auf.

Als Maß für die spezifische Produktionsleistung wurde der Quotient aus eingesetztem monomeren Diisocyanat und erhaltenem Polyisocyanat mit 3,23 ermittelt. Der Kehrwert hieraus in Prozent stellt die Harzausbeute dar und ergibt 31%. Der rechnerische Polymerisierungsgrad für das HDI-Polyisocyanat beträgt 18,4%.

## Polyisocyanat B (Beispiel B, erfindungsgemäßes Beispiel):

In einen Vierhalskolben ausgestattet mit Rührer, Rückflusskühler, $N_2$-Durchleitungsrohr und Innenthermometer wurden 1000 g (6,49 mol) 1,5-Pentamethylendiisocyanat (PDI) vorgelegt und drei mal bei Raumtemperatur entgast und mit Stickstoff belüftet. Anschließend wurde der Ansatz auf 60 °C erwärmt und 9,0 ml der Katalysatorlösung (1,5 %ige N,N,N-Trimethyl-N-benzylammoniumhydroxid Lösung in Methanol und 2-Ethylhexanol) so zudosiert, dass die exotherme Trimerisierung bei einer Temperatur von 60-80 °C gehalten wurde. Bei Erreichen eines NCO-Gehalts von 36,7 Gew.-% wurde die Reaktion mit Dibutylphosphat (equimolare Menge bezogen auf eingesetztes Trimethylbenzylammoniumhydroxid) gestoppt und das überschüssige PDI bei 140 °C und 0,5-0,6 mbar Druck über eine Dünnschichtdestillation abgetrennt.

Die so erhaltene Harzmenge von 510 g wies einen NCO-Gehalt von 21,7%, einen Restmonomerengehalt von 0,3% auf und eine Viskosität von 10.000 mPa*s bei 23 °C auf.

Als Maß für die spezifische Produktionsleistung wurde der Quotient aus eingesetztem monomeren Diisocyanat und erhaltenem Polyisocyanat mit 1,96 ermittelt. Der Kehrwert hieraus in Prozent stellt die Harzausbeute dar und ergibt 51%. Der rechnerische Polymerisierungsgrad des erfindungsgemäßen Polyisocyanates beträgt 32,6%.

## Untersuchung der Viskosität der Polyisocyanatmischungen

In Figur 1 ist die sogenannte Verdünnungsreihe der beiden Polyisocyanatmischungen A (Vergleichsbeispiel, durchgezogene Line) und B (erfindungsgemäßes Beispiel, gestrichelte Linie) dargestellt. Hierbei werden von den jeweiligen Polyisocyanatmischungen (Butylacetat als organisches Lösungsmittel) mit abnehmendem Festkörpergehalt angesetzt und anschließend nach gründlicher Vermischung die Viskosität mittels des MCR301-Rheometer der Firma AntonPaar in einem Becher/Rotor-System (CC27) untersucht.

Tabelle 1: Ergebnisse der rheologischen Untersuchung der Polyisocyanatmischungen

| Formulierung | | | 1 (erfindungsgemäß) | 2 (Vergleichsbeispiel) | 3 (erfindungsgemäß) | 4 (Vergleichsbeispiel) |
|---|---|---|---|---|---|---|
| Produkt | Äquivalent-gewicht | Festkörperanteil (Lieferform) | | | | |
| Polyacrylat | | | | | | |
| Setalux D A 870 BA | 580 | 70 | 116 | 116 | | |
| Setalux D A 665 BA/X | 570 | 60 | | | 114 | 114 |
| BUTYLACETAT | | | 69 | 67 | 73 | 73 |
| Polyisocyanat | | | | | | |
| Polyisocyanat A | 193 | 100 | | 38,6 | | 38,6 |
| Polyisocyanat B | 195 | 100 | 39 | | 39 | |
| | | | | | | |
| Auslaufzeit im DIN4 Becher | | | 20 sec. | 20 sec. | 20 sec. | 20 sec. |
| Festkörpergehalt [%] | | | 53,7 | 54,1 | 47,5 | 47,4 |
| Verhältnis NCO/OH | | | 1.0 | 1.0 | 1.0 | 1.0 |

In Tabelle 1 wurden die Formulierungen 1 bis 4 mit den beiden Polyioscyanaten A (Vergleichsbeispiel) und B (erfindungsgemäßes Beispiel) und zwei verschiedenen Polyacrylaten der Firma Nuplex Resins GmbH Bitterfeld in einem NCO/OH-Verhältnis von 1,0 angesetzt und auf eine Auslaufzeit im DIN 4 Becher von 20 Sekunden durch Verdünnung mit Butylacetat eingestellt. Wie aus dem gemessenen Festkörpergehalt ersichtlich, ist der für die Spritzviskosität maßgebliche Festkörperanteil der jeweils zu vergleichenden Formulierungen 1 und 2 sowie 3 und 4 auf einem Niveau.

Figur 1 zeigt das Viskositätsprofil der erfindungsgemäßen Polyisocyanatmischung B und der Polyisocyanatmischung A als Vergleichsbeispiel. Dabei wird der Festkörpergehalt der Polyisocyanatmischungen (S.C. solid content in Gew.-%) gegen die gemessene Viskosität $\mu$ aufgetragen. Es ist deutlich zu erkennen, dass beide Polyisocyanate in dem für die Lackindustrie wichtigen Bereich zwischen 40 und 60 Gew.-% Festkörperanteil keinen Viskositätsunterschied aufwiesen. Ferner liegt die Viskosität bis zu einem Festkörpergehalt von über 70 Gew.-% für die Lackindustrie unerheblich weit auseinander. Dieses Ergebnis ist überraschend, da sich die Polarität des 1,5-Pentamethylendiisocyanat basierten Polyisocyanates aufgrund der kürzeren linearen aliphatischen Alkylkette im 1,5-Pentamethylendiisocyanat gegenüber dem 1,6-Hexamethylendiisocyanat basierten Polyisocyanat deutlich unterscheidet. Bei noch höheren Festkörpergehalten ($\geq$ 80 Gew.-%) weist die erfindungsgemäße Polyisocyanatmischung die erwartete höhere Viskosität gegenüber der Polyisocyanatmischung des Vergleichsbeispiels auf.

Damit ist es gelungen mit der erfindungsgemäßen Polyisocyanatmischung einen Lackrohstoff mit einer deutlich erhöhten Raum-Zeitausbeute im Vergleich zu den herkömmlichen Polyisocyanatmischungen auf Basis von HDI herzustellen, die gleichzeitig die für die Lackierindustrie benötigten Auslaufzeiten in Lackformulierungen erzielt, ohne Anpassungen in der Mengenbilanz etablierter Formulierungen vornehmen zu müssen.

## Patentansprüche

1. Polyisocyanatmischung, enthaltend wenigstens ein Polyisocyanat auf Basis von 1,5-Diisocyanatopentan und wenigstens ein organisches Lösungsmittel, wobei das organische Lösungsmittel gegenüber Isocyanatgruppen inert ist und wobei die Polyisocyanatmischung einen Festkörpergehalt von $\geq$ 35 und $\leq$ 65 Gew.-% aufweist.

2. Polyisocyanatmischung gemäß Anspruch 1, wobei das Polyisocyanat einen Polymerisierungsgrad von $\geq$ 20%, bevorzugt von $\geq$ 25% und besonders bevorzugt von $\geq$ 30% aufweist.

3. Polyisocyanatmischung gemäß einem der Ansprüche 1 oder 2, wobei das organische Lösungsmittel aus der Gruppe aromatischer oder aliphatischer Alkane, Alkene, Ester, Ether, Nitrile und Ketone ausgewählt wird.

4. Polyisocyanatmischung gemäß einem der Ansprüche 1 bis 3, wobei die Polyisocyanatmischung eine Viskosität bei 23 °C von $\geq$ 3 und $\leq$ 500 mPa*s, bevorzugt von $\geq$ 4 und $\leq$ 400 mPa*s aufweist.

5. Polyisocyanatmischung gemäß einem der Ansprüche 1 bis 4, wobei die Polyisocyanatmischung unter Verwendung von 1,5-Diisocyanatopentan als alleinigem Diisocyanat hergestellt ist und eine mittlere NCO-Funktionalität von 2 bis 9, bevorzugt von 2,3 bis 7,5 und besonders bevorzugt von 2,5 bis 6 aufweist.

6. Polyisocyanatmischung gemäß einem der Ansprüche 1 bis 5, wobei die Polyisocyanatmischung unter Verwendung von 1,5-Diisocyanatopentan als alleinigem Diisocyanat hergestellt ist und einen Gehalt an Isocyanatgruppen von 15,0 bis 27,25 Gew.-%, bevorzugt von 17,0 bis 24,0 Gew.-% und besonders bevorzugt von 19,0 bis 23,0 Gew.-%, bezogen auf das Gesamtgewicht an Polyisocyanat in der Polyisocyanatmischung, aufweist.

7. Polyisocyanatmischung gemäß einem der Ansprüche 1 bis 6, wobei die Polyisocyanatmischung unter Verwendung von 1,5-Diisocyanatopentan als alleinigem Diisocyanat hergestellt ist und einen Gehalt an monomerem 1,5-Diisocyanatopentan von weniger als 1,0 Gew.-%, vorzugsweise von weniger als 0,5 Gew.-%, besonders bevorzugt von weniger als 0,3 Gew.-% aufweist.

8. Zwei-Komponenten-System enthaltend eine Komponente I), umfassend wenigstens eine Polyisocyanatmischung gemäß einem der Ansprüche 1 bis 7 sowie gegebenenfalls weitere Hilfs- und Zusatzstoffe und eine Komponente II), umfassend wenigstens ein gegenüber Isocyanatgruppen reaktives Bindemittel sowie gegebenenfalls weitere Hilfs- und Zusatzstoffe.

9. Zwei-Komponenten-System gemäß Anspruch 8, wobei das gegenüber Isocyanatgruppen reaktive Bindemittel wenigstens eine amino-, thio- und/oder hydroxyfunktionelle Verbindung, bevorzugt wenigstens eine hydroxyfunktionelle Verbindung umfasst.

**10.** Verfahren zur Herstellung einer Beschichtung, bei dem ein Zwei-Komponenten-System gemäß einem der Ansprüche 8 oder 9 gemischt und gegebenenfalls unter Erwärmen gehärtet wird.

**11.** Beschichtung, hergestellt oder herstellbar nach einem Verfahren gemäß Anspruch 10.

**12.** Verwendung des Zwei-Komponenten-Systems gemäß einem der Ansprüche 8 oder 9 zur Herstellung einer Beschichtung auf einem Substrat.

**13.** Verbund aus einer Beschichtung gemäß Anspruch 11 und einem Substrat mit einer Oberfläche aus Metall, Holz und/oder Kunststoff.


**Claims**

**1.** Polyisocyanate mixture comprising at least one polyisocyanate based on 1,5-diisocyanatopentane and at least one organic solvent, the organic solvent being inert toward isocyanate groups, and the polyisocyanate mixture having a solids content of $\geq$ 35 and $\leq$ 65 wt%.

**2.** Polyisocyanate mixture according to Claim 1, the polyisocyanate having a degree of polymerization of $\geq$ 20%, preferably of $\geq$ 25%, and more preferably of $\geq$ 30%.

**3.** Polyisocyanate mixture according to either of Claims 1 and 2, the organic solvent being selected from the group of aromatic or aliphatic alkanes, alkenes, esters, ethers, nitriles, and ketones.

**4.** Polyisocyanate mixture according to any of Claims 1 to 3, the polyisocyanate mixture having a viscosity at 23°C of $\geq$ 3 and $\leq$ 500 mPa*s, preferably of $\geq$ 4 and $\leq$ 400 mPa*s.

**5.** Polyisocyanate mixture according to any of Claims 1 to 4, the polyisocyanate mixture having been prepared using 1,5-diisocyanatopentane as sole diisocyanate, and having an average NCO functionality of 2 to 9, preferably of 2.3 to 7.5, and more preferably of 2.5 to 6.

**6.** Polyisocyanate mixture according to any of Claims 1 to 5, the polyisocyanate mixture having been prepared using 1,5-diisocyanatopentane as sole diisocyanate, and having an isocyanate group content of 15.0 to 27.25 wt%, preferably of 17.0 to 24.0 wt%, and more preferably of 19.0 to 23.0 wt%, based on the total weight of polyisocyanate in the polyisocyanate mixture.

**7.** Polyisocyanate mixture according to any of Claims 1 to 6, the polyisocyanate mixture having been prepared using 1,5-diisocyanatopentane as sole diisocyanate, and having a monomeric 1,5-diisocyanatopentane content of less than 1.0 wt%, preferably of less than 0.5 wt%, more preferably of less than 0.3 wt%.

**8.** Two-component system comprising a component I), comprising at least one polyisocyanate mixture according to any of Claims 1 to 7 and also, optionally, further auxiliaries and additives, and a component II), comprising at least one binder that is reactive toward isocyanate groups, and also, optionally, further auxiliaries and additives.

**9.** Two-component system according to Claim 8, the binder that is reactive toward isocyanate groups comprising at least one amino-, thio- and/or hydroxy-functional compound, preferably at least one hydroxy-functional compound.

**10.** Method for producing a coating, wherein a two-component system according to either of Claims 8 and 9 is mixed and is cured optionally with heating.

**11.** Coating produced or producible by a method according to Claim 10.

**12.** Use of the two-component system according to either of Claims 8 and 9 for producing a coating on a substrate.

**13.** Assembly composed of a coating according to Claim 11 and a substrate having a surface of metal, wood and/or plastic.

## Revendications

1. Mélange de polyisocyanate, contenant au moins un polyisocyanate à base de 1,5-diisocyanatopentane et au moins un solvant organique, le solvant organique étant inerte vis-à-vis des groupes isocyanate et le mélange de polyisocyanate présentant une teneur en solides ≥ 35 et ≤ 65 % en poids.

2. Mélange de polyisocyanate selon la revendication 1, dans lequel le polyisocyanate présente un degré de polymérisation ≥ 20 %, de préférence ≥ 25 % et de manière particulièrement préférée ≥ 30 %.

3. Mélange de polyisocyanate selon l'une quelconque des revendications 1ou 2, dans lequel le solvant organique est choisi dans le groupe constitué par les alcanes aromatiques et aliphatiques, les alcènes, les esters, les éthers, les nitriles et les cétones.

4. Mélange de polyisocyanate selon l'une quelconque des revendications 1à 3, dans lequel le mélange de polyisocyanate présente une viscosité à 23 °C ≥ 3 et ≤ 500 mPa*s, de préférence ≥ 4 et ≤ 400 mPa*s.

5. Mélange de polyisocyanate selon l'une quelconque des revendications 1 à 4, dans lequel le mélange de polyisocyanate est fabriqué en utilisant du 1,5-diisocyanatopentane en tant que seul diisocyanate, et présente une fonctionnalité NCO moyenne de 2 à 9, de préférence de 2,3 à 7,5, et de manière particulièrement préférée de 2,5 à 6.

6. Mélange de polyisocyanate selon l'une quelconque des revendications 1 à 5, dans lequel le mélange de polyisocyanate est fabriqué en utilisant du 1,5-diisocyanatopentane en tant que seul diisocyanate, et présente une teneur en groupes isocyanate de 15,0 à 27,25 % en poids, de préférence de 17,0 à 24,0 % en poids, et de manière particulièrement préférée de 19,0 à 23,0 % en poids, par rapport au poids total de polyisocyanate dans le mélange de polyisocyanate.

7. Mélange de polyisocyanate selon l'une quelconque des revendications 1 à 6, dans lequel le mélange de polyisocyanate est fabriqué en utilisant du 1,5-diisocyanatopentane en tant que seul diisocyanate, et présente une teneur en 1,5-diisocyanatopentane monomère de moins de 1,0 % en poids, de préférence de moins de 0,5 % en poids, de manière particulièrement préférée de moins de 0,3 % en poids.

8. Système bicomposant contenant un composant I), comprenant au moins un mélange de polyisocyanate selon l'une quelconque des revendications 1 à 7, ainsi qu'éventuellement d'autres adjuvants et additifs, et un composant II), comprenant au moins un liant réactif avec les groupes isocyanate, ainsi qu'éventuellement d'autres adjuvants et additifs.

9. Système bicomposant selon la revendication 8, dans lequel le liant réactif avec les groupes isocyanate comprend au moins un composé à fonction amino, thio et/ou hydroxy, de préférence au moins un composé à fonction hydroxy.

10. Procédé de fabrication d'un revêtement, selon lequel un système bicomposant selon l'une quelconque des revendications 8 ou 9 est mélangé et éventuellement durci avec chauffage.

11. Revêtement, fabriqué ou pouvant être fabriqué par un procédé selon la revendication 10.

12. Utilisation du système bicomposant selon l'une quelconque des revendications 8 ou 9 pour la fabrication d'un revêtement sur un substrat.

13. Composite d'un revêtement selon la revendication 11 et d'un substrat ayant une surface en métal, bois et/ou plastique.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0330966 B1
- EP 0798299 B1
- DE 1493360 B1
- DE 1900514 A1
- DE 19611849
- EP 0798299 A
- EP 2418198 A
- EP 2684867 A
- JP 2010121011 A
- JP 2010254764 A
- JP 2010265364 A
- JP 2011201863 A

- JP 2012152202 A
- JP 2013060542 A
- EP 0289840 B1
- EP 1319655 A2
- EP 1555258 A1
- EP 1275639 A1
- EP 1275640 A1
- EP 1449826 A1
- EP 1754698 B1
- DE 10359627 A1
- DE 102005042392 A1
- EP 0403921 B

**In der Beschreibung aufgeführte Nicht-Patentliteratur**

- **H. J. LAAS ; R. HALPAAP ; J. PEDAIN ; J. PRAKT.** *Chem.,* 1994, vol. 336, 185-200

- **W. SIEFKEN.** *Liebigs Ann. Chem.,* 1949, vol. 562, 122
- *J. Prakt. Chem.,* 1994, vol. 336, 185-200